Europäisches Patentamt

European Patent Office

Office européen des brevets

(11) Publication number: **0 371 606**
**A2**

## EUROPEAN PATENT APPLICATION

(21) Application number: **89310912.4**

(51) Int. Cl.5: **G06F 15/21**

(22) Date of filing: **23.10.89**

(30) Priority: **29.11.88 US 277387**

(43) Date of publication of application:
**06.06.90 Bulletin 90/23**

(84) Designated Contracting States:
**DE FR GB**

(71) Applicant: **International Business Machines Corporation Old Orchard Road**

**Armonk, N.Y. 10504(US)**

(72) Inventor: **MacPhail, Margaret Gardner**
**2105 Tower Drive**
**Austin, TX 78703(US)**

(74) Representative: **Grant, Iain Murray**
**IBM United Kingdom Limited Intellectual Property Department Hursley Park Winchester Hampshire SO21 2JN(GB)**

(54) **Methods of managing stapled documents.**

(57) There is disclosed a method of establishing a staple relationship between two documents within an information processing system. An end user indicates to the system that a staple relationship is to be established between two identified documents. The end user enters a definition of the staple relationship which includes any attributes to be associated with the identified documents within the staple relationship. The system will create the staple relationship and file the identified documents in a library within the system. The system then maintains the staple relationship between the identified documents.

FIG. 2

# METHODS OF MANAGING STAPLED DOCUMENTS

This invention relates to methods of managing stapled documents in an information processing system and to methods of filing stapled documents therein.

In recent times, automation of offices is rapidly becoming a reality for an increasing number of organisations. Office automation helps the organisations integrate data files with text, store and retrieve correspondence and reports electronically, distribute documents electronically and support the day-to-day activities of administrative personnel, professionals and managers.

While some of the benefits of electronic document processing can be realised from a single, stand-alone office system, a network which connects office systems in various locations in the organisation increases the productivity of the organisation. Physically, a network is a combination of interconnected pieces of equipment and programs used for moving information between points where it may be generated, processed, stored and used. From the viewpoint of an user of the network, the network is a collection of services which are useful in creating, revising, distributing, filing and retrieving documents.

In today's electronic office, documents are physically grouped or stored using one of the following techniques: partition data sets, directories and folders. Partition data sets are storage areas on a disk or other form of storage medium. Documents stored in a partition data set only exist in that storage area and a partition data set can not be deleted until all of the documents included therein have been removed. Generally, the documents are filed in the partition data set in the order created and there is no other relationship regarding the order to the documents.

Directories are similar to partition data sets in that they are physical storage areas for documents for files. Documents can not exist in more that one physical storage area. The documents contained in a directory are not logically organised.

In regards to both the partition data sets and the directories, if a user filed a group of documents which are related to a general topic and wanted to review the group of documents, the user would have to first locate the partition data set or sets or the directory or directories containing the documents. In partition data sets and directories, documents have to be deleted from the bottom up. Additionally, it is very difficult to rearrange documents stored or grouped using these two techniques. The documents must be copied and then deleted. Moreover, partition data sets, except for the contents thereof, can not be distributed. Directories can not be distributed in their entirety. Linear and hierarchical groupings can not be distributed using directories or partition data sets because the groupings mechanism used therewith will be lost. This type of operation technique reduces the efficiency of the electronic office. Folders are documents which form hierarchical and linear relationship between a group of documents. Folders can be nested to form the hierarchical relationship whereby the group of documents within a folder are ordered to form the linear relationship. The documents within a folder are organised sequentially by a specified descriptor or by a specified position number. Access to a folder is independent from the documents contained therein. Documents within a folder can be manipulated as a single document, as a set of documents which comprise the entire folder or as a set of documents which comprise a specified level of the folder document.

A folder can be used to form a directed or one-to-one relationship between two documents. This requires the folder to be a first document and a document contained therein to be a second document. The relationship suffers in that not all documents are folders and if any other documents are entered into the folder, the one-to-one relationship between the first and the second document becomes unclear.

The use of partitioned data sets and directories in establishing directed relationships between two documents suffers from limitations which are similar to those as a result of using a folder. There is no way to identify which document is coupled to another, when more than two documents are included in a partitioned data set or directory, the one-to-one relationship is lost and the forms of grouping documents requires the creation of a new folder, directory or partition to establish the relationship.

Consequently, what is needed is a technique for establishing a directed relationship between documents without creating additional documents or groups.

The invention provides in an information processing system having a plurality of documents stored therein, a method of filing documents having a directed relationship within the system, the method comprising the steps of:

identifying at least two of the plurality of documents to be associated with the directed relationship; and

defining a staple relationship between the at least two of the plurality of documents.

There is disclosed hereinafter a method of filing stapled documents in an information processing system. An end user indicates to the system that a staple relationship is to be created between at least two identified documents stored in therein. The staple relationship is then defined by entering stapler/staplee attributes of the at least two documents including whether or not history is to be maintained and pointers to the physical locations of the at least two documents in the system. In response to the entry of data defining the staple relationship, a file request is transmitted to the library server along with copies of any documents which are not filed in the library. The server will set the data objects associated with the identified documents to reflect the staple relationship. Thereafter, the server files the identified documents into the library as specified by the staple relationship defined by the end user.

The present invention will be described further by way of example with reference to embodiments thereof as illustrated in the accompanying drawings, in which:

Fig. 1 is a block diagram of a document management system;

Fig. 2 is a model of a document showing the various objects associated with a document stored in the system of Fig. 1;

Figs. 3 through 6 are object structures which are employed in establishing a directed relationship between documents; and

Figs. 7 through 9 are various flow charts illustrating detailed steps of the operation involved.

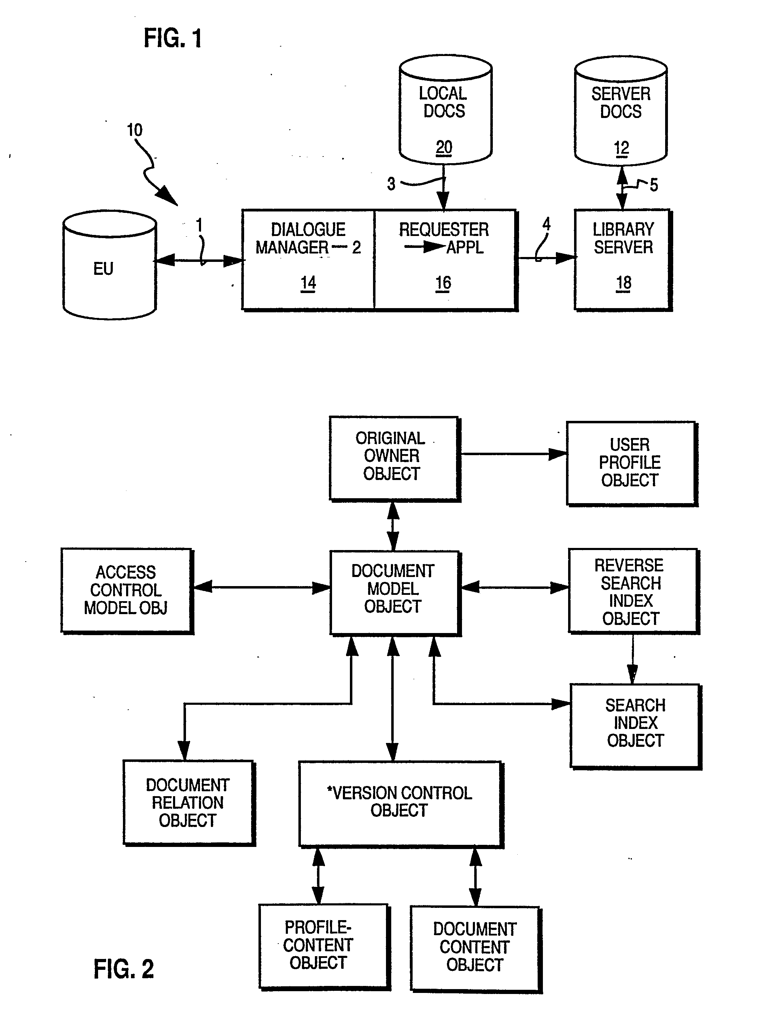

Fig. 1 shows a document management system 10 which controls the creation, retrieval, editing and distribution of documents within an information processing system. Moreover, the document management system 10 enables an end user (EU) to file a pair of documents which are coupled together in a stapled relationship. In essence, a stapled pair of documents to be filed consists of documents copied from the EU's local storage, the server's storage or a combination of both. Thus, the EU creates the staple relationship by interacting with a dialogue manager application 14 providing the data which is necessary to file the stapled pair of documents in the system. The necessary data includes access control information, contextual-search characteristics, requester/principle identifiers and a definition of the stapled pair of documents. The definition of the stapled pair includes an indication that a document is stapled by another document and pointers to the physical location of all of the documents to be filed. These documents can be directly accessible to the requester application 16 or they can be directly accessible to the requester's server 18. After the dialogue manager application 14 has gathered the above-identified information, it transmits the information to the requester application program 16.

The requester application application program 16, in response to input from the dialogue manager application 14, builds an add or a file request and transmits the request to the requester's server 18. The file request is built when at least one of the documents specified to be to be a part of the staple relationship is stored in a local storage medium 20. The add request is built when all of the documents specified are stored in a library 12. The requester application program 16 makes a copy of each of the locally accessible documents identified by the EU which are stored in the local storage medium 20. The copies of the documents are transmitted to the requester's server 18 along with the request. Additionally, the requester application program 16 transmits pointers to the physical location of all of the documents in the staple relationship which are stored in the local storage 20 and not otherwise identified.

The requester's server 18 files the stapled documents into the library 12 as specified in the add or file request.

The document management system 10 shown in Fig. 1 uses a uniform structure for exchanging information within the system. This structure includes an encoding scheme which is designed to convey any document, irrespective of it content, from one type of office system to another and to communicate the intent of the person creating or transmitting a document as to the method of processing thereof. One type of structure which meets all of these requirements is the Document Interchange Architecture (DIA) which is a part of a DISOSS office system marketed by the International Business Machines Corporation.

DIA is a program-to-program communication architecture which defines the protocols and data structures that enable programs to interchange information such as documents and messages in a consistent and predictable manner. DIA is independent of the type of information managed by DIA services. DIA includes document objects which contain parameters or descriptors that describe the contents of the information being transmitted. The descriptors contained in the objects include the name under which the information is filed, the authors, the subject of the information and the date the information was filed in the document history. These descriptors enable a document to be searched in a storage medium such as the server library 12.

The server library 12 performs various services for the system 10. These services are used for storing and retrieving documents electronically. Whenever a document is filed in the server library 12, a set of descriptors called a document profile is filed with it. The profile contains the descriptors noted above. Document profiles are used in searching for documents in the library 12. For purposes of illustration and not limitation, a EU can ask the system 10 to search for all documents regarding a particular subject and by a certain author which was filed in the library 12 between any two dates. Upon completing the search, the system presents the EU with a list of the documents which meet the search criteria. The EU could then ask the system 10 to retrieve a copy of a specific document on the list from the library an deliver the copy the EU for printing or viewing.

The server library 12 also provides the following services: file documents in and retrieve or delete documents from the library; update work in progress documents in the library; specify a security level to associate with the document that is being filed; allow authorised end users other than the EU who filed the document to retrieve the document from the library and perform searches for and retrieve documents in the library for other end users. The server library 12 assigns each new document filed in therein a unique name called a library-assigned document name (LADN). This name is returned to the requester and can be used to uniquely identify the document at some later time.

Referring to Fig. 2, each document stored in the server library 12 includes the objects shown therein. All of the objects shown in Fig. 2 are created in response to the processing a FILE command.

* A document model object contains information concerning ownership and attributes of a specific document. This object controls the access to the document during its life in the library.

* An original owner object contains or points to information used by an owner of the document to control access to the document as filed.

* A document content object provides for the storage of the document content and for saving information relating to the actual size of the filed document.

* A document relation object describes the logical relationships between the document and other documents. If the document is a folder, each of the documents contained therein has a pointer or LADN entry in this object. If this document is in one or more folders, then each folder has a pointer or LADN entry in this object. Enter and remove history may be maintained for the document either as a folder or as a document in other folders.

* An access control model object is created when the document owner authorises other users to access the document.

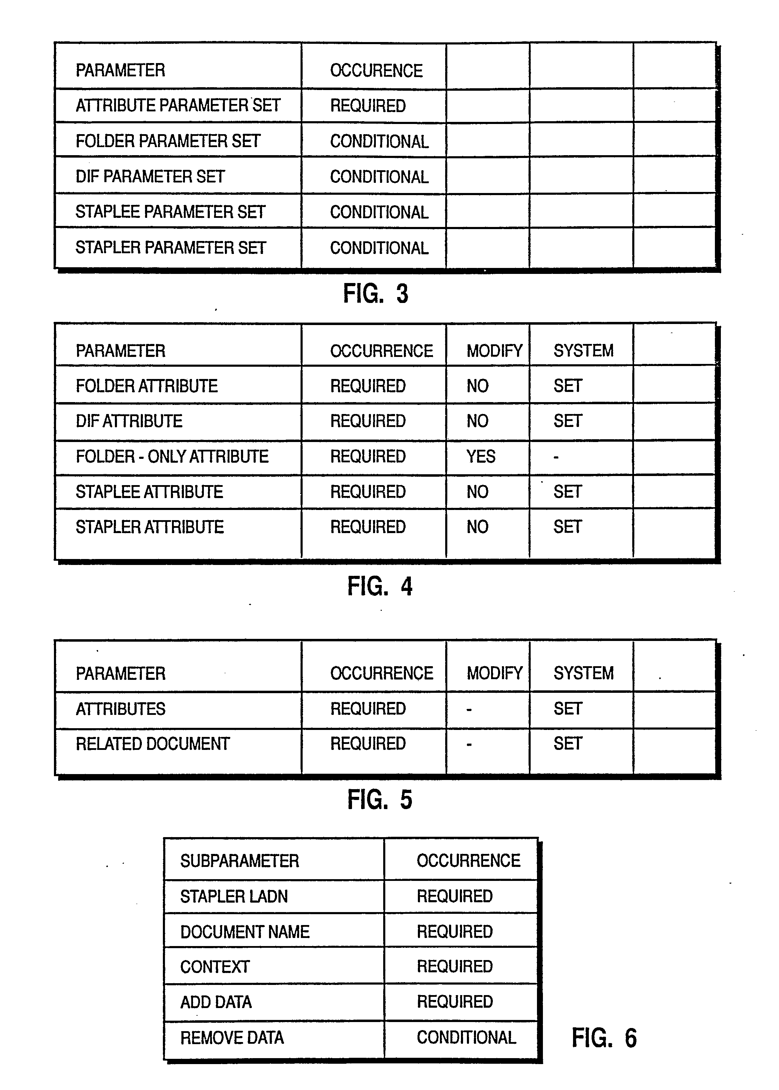

Structures for all of the above-identified objects except document relations object (DRO) are a part of the DISOSS office system and will not be described herein. Every document stored in system 10 has a document relations object associated therewith. Fig. 3 shows the structure of the DRO which consists of the following: an attribute parameter set, a folder document parameter set, a document-within-a-folder (DIF) parameter set, a staplee parameter set and a stapler parameter set.

The attribute parameter set indicates whether or not the document associated with the DRO is a folder or whether or not the document is a 'folder-only' document. Additionally, the attribute parameter set indicates whether or not in a stapled relationship the associated document is designated as a "staplee" or as a "stapler" with respect to another document. A staplee document is a document which is stapled by another document. A stapler document is a document which is stapled to another document. Fig. 4 illustrates the structure for the attribute parameter set. A folder attribute indicates whether or not the document associated with the document relation object is a folder. If the document is a folder, then a folder section parameter set is required. A DIF (document in folder) attribute indicates whether or not the document is contained within any folders. A folder-only attribute indicates whether or not the document can be viewed as existing on its own when it is included within a folder. Documents are viewed as folder-only when both the DIF and Folder-only attributes are positively set.

A physical document in a physical folder is a folder-only document. In essence, the physical document exists in the folder and can not stand on its own. However, electronic documents can logically exist in multiple places at the same time. Therefore, a document can appear to be in more than one folder and standing on its own all at the same time. Whether or not the document can stand on its own when it is also in a folder is indicated by the folder-only attribute. Folder-only documents are viewed as stand-alone when they are not contained by any folders.

The staplee attribute indicates whether or not the document associated with the DRO is a stapled by another document. The stapler attribute indicates whether or not the document associated with the DRO is stapled to another document.

Fig. 5 illustrates the structure for the staplee section parameters. The staplee parameters associated with the DRO is defined as a repository for information specific to a document stapled by another document. The staplee parameters are created when the document associated with the DRO is stapled by another document. The staplee parameters are preserved with the document until the document is deleted from a document library or the document is unstapled by its last document. The attributes parameter allows for the specification of a history option when the document is stapled and unstapled by another document. The history option includes a related document parameter set associated with the document is deleted

4

when the document is unstapled by another document and created when the document is stapled by another document. Alternatively, the related document parameter set is maintained when the document is unstapled by another document. The request date, time and requester's identification are added to the related document parameter set. When the document is restapled by the same document, the new staple date, time and the requester's identification are added to the related document parameter set.

The related document parameter set includes the following:

* a related document parameter introducer,
* the LADN of the document by which the document is stapled,
* an user-assigned document name of the other document,
* the context in which this document was stapled by the other document,
* the date and time this document was stapled by the other document,
* the identification of the staple requester,
* the date and time the document was unstapled and
* the identification of the unstaple requester if the history option is specified.

Fig. 6 illustrates the structure for the staplee related document subparameters. The stapler LADN is a unique name assigned to the other document by the server library when the other document was filed in the library. The document name parameter identifies the other document by its user-assigned name. The context parameter set specifies the context in which this document is stapled by the other document: the context can be all folders, a set of folders, an application, or a set of applications. The other document can appear in more than one folder. The context parameter can be used to specify in which folders this document appears to be stapled by the other document. Similarly, the context parameter can be used to specify that this document is stapled by the other document in the context of an application. For purposes of illustration and not limitation, an application used to highlight data in a document could create an overlay template and staple it to another document. When the application is used, the template highlights the data without disturbing the original document. Moreover, the template may not have any meaning outside of the context of the application.

The add data subparameter specifies the date the document was stapled by the other document, the address of the requester. The remove data subparameter specifies the date the document was unstapled by the other document and the address of the requester.

The stapler section of the DRO is defined as a repository for information specific to a document stapled to another document. The structures (not shown) associated with the stapler parameter set are identical those set forth above and in Figs. 3 through 6 for the staplee parameter set except reference is made to the document stapled to another document.

Set out below is an illustration of an application program that can be invoked by the requester application 16 in filing stapled documents within the context of an application in the information processing system. The application program is in program design language from which source code and machine code are derivable.

```
BEGIN REQUESTER PROC
        INPUT
                ACCESS CONTROL INFORMATION
                CONTEXTUAL-SEARCH CHARACTERISTICS
                DO FOR EACH DOCUMENT SPECIFIED IN THIS
                   REQUEST:
                        A POINTER TO THE PHYSICAL DOCUMENT
                        (PPTR) WHICH WILL BE EITHER THE LOCAL
                        POINTER OR THE LIBRARY IDENTIFIER.

                        A UNIQUE IDENTIFIER (DID) FOR THIS
                        DOCUMENT WITHIN THE SCOPE OF THIS
                        REQUEST.

                        A REFERENCE IDENTIFIER (RID) FOR EACH
                        STAPLER BY WHICH THIS DOCUMENT IS
                        ATTACHED.

                        HISTORY ATTRIBUTES FOR THE DOCUMENTS.
                ENDDO
        PROCESS
```

```
SET THE ACCESS CONTROL, CONTEXTUAL-SEARCH
CHARACTERISTICS, AND IDENTIFIERS.
DO FOR EACH DOCUMENT (IDD OR RDD) EXPLICITLY
    SPECIFIED IN THE REQUEST:
        IF THE DOCUMENT DOES NOT EXIST IN THE
            LIBRARY, THEN
                COPY THE DOCUMENT.
                SET THE DOCUMENT ADDRESS (PPTR) TO
                POINT TO THE POSITION OF THE
                DOCUMENT IN THE REQUEST UNIT.
                SET UP THE DATA OBJECT (DRO) WHICH
                WILL CONTAIN THE UNIQUE LIBRARY
                IDENTIFIER FOR THE DOCUMENTS WHICH
                WILL BE STAPLED TO THIS DOCUMENT
                (STETOC).
                SET THE STAPLEE ATTRIBUTES
                (HISTORY) IN THE (DRO) AS
                SPECIFIED.
                SET UP THE DATA OBJECT (DRO) WHICH
                WILL CONTAIN THE UNIQUE LIBRARY
                IDENTIFIER FOR THE DOCUMENTS WHICH
                WILL BE STAPLED BY THIS DOCUMENT
                (STRTOC).
                SET THE STAPLER ATTRIBUTES
                (HISTORY) IN THE (DRO) AS
                SPECIFIED.
        ENDIF
        SET SPECIFIED IDENTIFIER FOR THIS
        DOCUMENT (DID).
        DO FOR EACH DOCUMENT (RID) STAPLED TO
            THIS DOCUMENT:
                SET THE RID FOR THE STAPLER FOR
                THIS IDD OR RDD.
                SET THE RELATIONSHIP TO STAPLE FOR
```

7

```
                    THIS IDD OR RDD.

                ENDDO

            ENDDO

        OUTPUT

            SEND COMPLETED REQUEST TO LIBRARY SERVER.

    END REQUESTER PROC
```

An end user (EU) or an application program can create two documents, attach them in a staple relationship and file the attached pair of documents into the library 12. Subsequent operations on the pair of documents can be performed on the documents separately or as a stapled pair of documents. For purposes of illustration and not limitation, a first document and a second document attached thereto can be retrieved or printed by only referring to one of the documents in the staple relationship.

The EU interacts with the dialogue manager application program 14 and enters a request to create the staple relationship between two documents in the library 12 which include the following data: access control, contextual-search characteristics, and requester/principle identifiers. The EU also defines the staple relationship by entering an indication that a first document is stapled to a second document, and stapler/staplee attributes of the documents to be filed including whether or not history is to be maintained. A stapler document is attached to a staplee document. Additionally, the definition of the staple relationship includes pointers to the physical location of all of the documents to be filed. These documents may be directly accessible to the requester application program 16 or accessible to the requester's server 18.

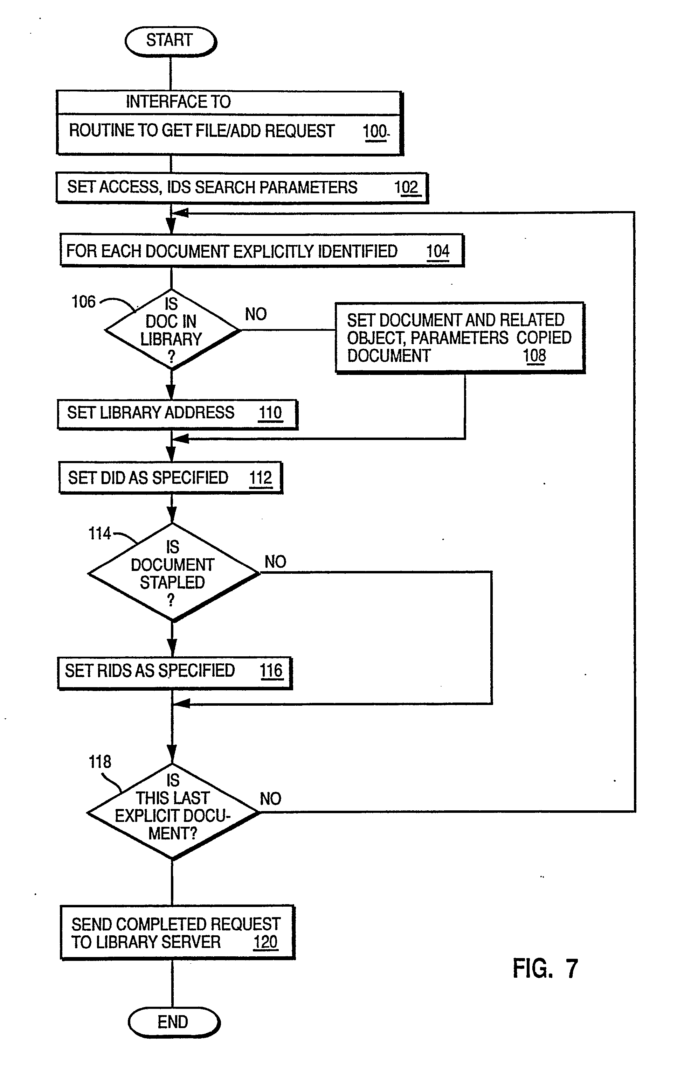

Referring to Fig. 7, there is shown a flow diagram for the requester application program 16 in filing stapled documents in the library 12. The requester application program 16 interfaces with the dialogue manager application 14 in step 100 to get the request entered by the EU. In step 102, the requester application program 16 builds operands specifying the access, contextual-search characteristics, requester and principle identifiers for all of the specified documents. The requester application program 16, in steps 104 through 110, builds an operand for each document explicitly specified in the request. If the document is passed with the request, an IDD operand is generated. If the document is already stored in the library 12, a RDD operand is generated. The IDD and RDD operands, respectively, include a pointer to the physical location of the document (PPTR). The RDD operand will contain a library pointer. The IDD operand will contain a pointer to the document unit contained within the request. The IDD and RDD operands also include a unique document identifier (DID) within the scope of the request. Moreover, the IDD and RDD operands may include optional references to documents stapled to this document (RID = DID of the stapler document).

The requester application program 16 also builds data areas which are associated with each of the documents specified in the request. A document relation object (DRO) contains the data for documents stapled by another (STETOC), the history attribute for documents stapled to another and data for documents stapled to another (STRTOC). After all of the documents which are not stored in the library 12 are copied, the specified identifier for this document is set in step 112.

In steps 114 and 116, for each document (RID) which is stapled to a document (IDD or RDD) specified in the request, a document RID and the relationship to the stapler are set. The staplee operand IDD or RDD has a subfield which is called RID. The value of RID is set to the unique identifier (DID) associated with the stapler's operand (IDD or RDD). Moreover, the relationship suboperand for the staplee document is set to indicate the staple relationship. It should be noted that a document can be stapled by or to a plurality of documents. Step 118 determines if all of the documents specified in the request have been processed and steps 104 through 116 are repeated for any remaining unprocessed documents. Otherwise, a completed request is transmitted to the requester's server 18 in step 120.

```
BEGIN LIBRARY SERVER PROC
        INPUT
                ACCESS CONTROL INFORMATION.
                CONTEXTUAL-SEARCH CHARACTERISTICS.
                REQUESTER/PRINCIPLE IDENTIFIERS.
                DO FOR EACH DOCUMENT SPECIFIED IN THIS
                   REQUEST, BUILD AN IDD OR A RDD OPERAND
                   WHICH INCLUDES:
                        A POINTER TO THE PHYSICAL DOCUMENT
                        (PPTR) WHICH WILL BE EITHER THE LOCAL
                        POINTER (IDD OPERAND) OR THE LIBRARY
                        IDENTIFIER (RDD OPERAND).


                        AN UNIQUE IDENTIFIER (DID) FOR THIS
                        DOCUMENT WITHIN THE SCOPE OF THIS
                        REQUEST.


                        A REFERENCE IDENTIFIER (RID) FOR EACH
                        DOCUMENT STAPLED TO THIS DOCUMENT.


                        A DOCUMENT RELATION OBJECT (DRO)
                        CONTAINING THE FOLLOWING:
                                DOCUMENT RELATION ATTRIBUTES.
                                A STAPLER ATTRIBUTE.
                                A STAPLER TABLE-OF-CONTENTS
                                (STRTOC) AREA WHICH WILL BE SET UP
                                BUT WILL NOT CONTAIN ANY ENTRIES.
                                A STAPLEE ATTRIBUTE.
                                A STAPLEE TABLE-OF-CONTENTS
                                (STETOC) AREA WHICH WILL BE SET UP
                                BUT WILL NOT CONTAIN ANY ENTRIES.
```

```
        ENDDO
    PROCESS
        CALL BUILD TABLES PROC TO BUILD DID/LADN AND
        RID/DID TABLES.
        DO FOR EVERY STAPLER (RID ENTRY):
            DO FOR EVERY STAPLEE (DID) TO BE
                STAPLED BY THIS STAPLER:
                PUT THE LADN ASSOCIATED WITH THIS
                DID IN THE STAPLER'S
                TABLE-OF-CONTENTS.
                IF HISTORY IS SPECIFIED FOR THIS
                    STAPLER, THEN
                        SET THE REQUESTER'S ID IN THE
                        HISTORY PORTION OF THE ENTRY.
                        SET THE PRINCIPLE'S ID IN THE
                        HISTORY PORTION OF THE ENTRY.
                        SET THE CURRENT DATE AND TIME
                        IN THE HISTORY PORTION OF THE
                        ENTRY.
                ENDIF
                PUT THE LADN ASSOCIATED WITH THIS
                STAPLER (RID) IN THE STAPLEE
                TABLE-OF-CONTENTS.
                IF HISTORY IS SPECIFIED FOR THIS
                    STAPLEE, THEN
                        SET THE REQUESTER'S ID IN THE
                        HISTORY PORTION OF THE ENTRY.
                        SET THE PRINCIPLE'S ID IN THE
                        HISTORY PORTION OF THE ENTRY.
                        SET THE CURRENT DATE AND TIME
                        IN THE HISTORY PORTION OF THE
                        ENTRY.
                ENDIF
            ENDDO
```

ENDDO

END PROCESS

END LIBRARY SERVER PROC

As noted above, each document operand (IDD or RDD) has a unique identifier (DID) assigned thereto. The library server 18 then gets a LADN for every document explicitly specified in the request. As shown in Table 1 below, a BUILD TABLE PROC is called to build a temporary table to match every DID to an associated LADN.

TABLE 1

| DID | LADN |
|-----|-------|
| 1 | LADN1 |
| 2 | LADN2 |
| 3 | LADN3 |
| 4 | LADN4 |
| 5 | LADN5 |

Moreover, each document operand which corresponds to a document that will be stapled by a stapler document includes a reference (RID) to that stapler document's unique document identifier (DID). The RID with the document operand is set to the value of the stapler document's operand's DID. The library server 18 then facilitates the building of a temporary table containing an entry for each stapler document referenced. Each entry for a stapler document will contain a list of DIDs representing the documents that are stapled by this stapler document.

For purposes of illustration and set forth in the Table 2 below, a stapler document with a DID of 1 is stapled to staplee documents with DIDs 3, 2, and 4. A stapler document with a DID of 4 is stapled to staplee documents with DIDs 5, 2, and 6. The document operand for staplee document 2 contains two RIDs, one for the specified stapler document 1 and another for the stapler document 4.

TABLE 2

| RID | DID |
|-----|-------|
| 1 | 3/2/4 |
| 4 | 5/2/6 |

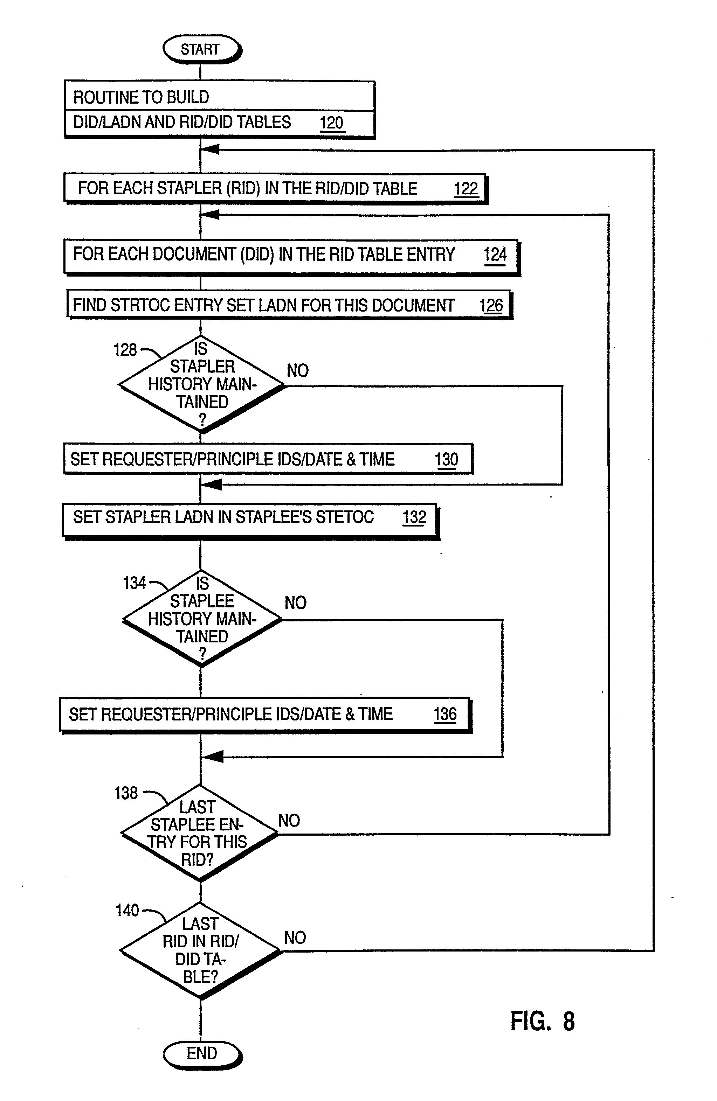

Referring to Fig. 8, there is shown a flow diagram for the server 18 in filing the stapled documents in the library 12. In step 120, the server 18 calls a build tables routine to build the DID/LADN and RID/DID tables. In steps 122, 124 and 126, for each stapler document RID and each document DID in the RID table entry, find stapler table-of-contents (STRTOC) and create the appropriate entry for this staplee document therein. The entry in the STRTOC includes a LADN for the staplee document and any history information. In step 128, a determination is made as to whether the stapler document history is to be maintained. If history is to be maintained on the stapler document, requester and principle user IDs and the current date and time are set in step 130. The requester user is one who is performing the request. The principle user is one on whose behalf the requester user may be acting. Generally, the requester and principle users re the same person or application. In step 132, an entry is made in the staplee table-of-contents (STETOC) for the stapler document. The entry in the STETOC includes a LADN for the stapler document and any history information. Step 134 determines whether history is to be maintained for the staplee document. The requester/principle users, current date and time are set in step 136 if history is to be maintained. Step 138 determines whether all staplee document have been processed. If there are other staplee documents to be processed, steps 124 through 136 are repeated. Step 140 determines whether the last RID in the RID/DID table has been processed. If there are other RIDs to be processed, control is transferred to step 122.

Set out below is an illustration of an application program that can be invoked by the server 18 in building the DID/LADN and RID/DID tables. The program is in program design language from which source code and machine code are derivable.

```
BEGIN BUILD TABLES PROC
     DO FOR EACH DOCUMENT SPECIFIED IN THE REQUEST:
          IF THE DOCUMENT DOES NOT EXIST IN THE
               LIBRARY, THEN
                    COPY THE DOCUMENT AND ITS RELATED
                    OBJECTS INTO THE LIBRARY.
                    ASSIGN AN UNIQUE LIBRARY IDENTIFIER
                    (LADN) TO THIS DOCUMENT.
          ELSE
                    OBTAIN THE UNIQUE LIBRARY IDENTIFIER
                    (LADN) FOR THIS DOCUMENT.
          ENDIF
          SAVE THE UNIQUE IDENTIFIER (DID) FOR THE
          REQUEST WITH THE UNIQUE LIBRARY IDENTIFIER
          (LADN) IN DID/LADN TABLE.
          DO FOR EACH STAPLER REFERENCED (RID) BY THIS
             DOCUMENT OPERAND:
                    IF THERE IS NO ENTRY IN THE RID/DID
                       TABLE, THEN
                         CREATE AN ENTRY FOR THIS RID IN
                         THE TABLE.
                    ENDIF
                    SET DID IN THE RID/DID TABLE.
                    ENDIF
          ENDDO
     ENDDO
END BUILD TABLES PROC
```

The server 18 keeps track of the order in which document operands are specified. The server 18 builds an entry in the temporary table for every document specified in the IDD or RDD operand. Each entry matches a DID to a LADN. Additionally, if the current document operand references a stapler document by which is will be stapled, the RID/DID temporary table is updated. The server 18 then processes a IDD if the document does not exist in the library 12. The document is then filed into the library 12 along with its associated data areas which includes the DRO and assigns a new LADN to the document. Thereafter, server 18 processes a RDD if the document does exist in the library 12 and builds the appropriate entries in the RID/DID temporary table for the document.

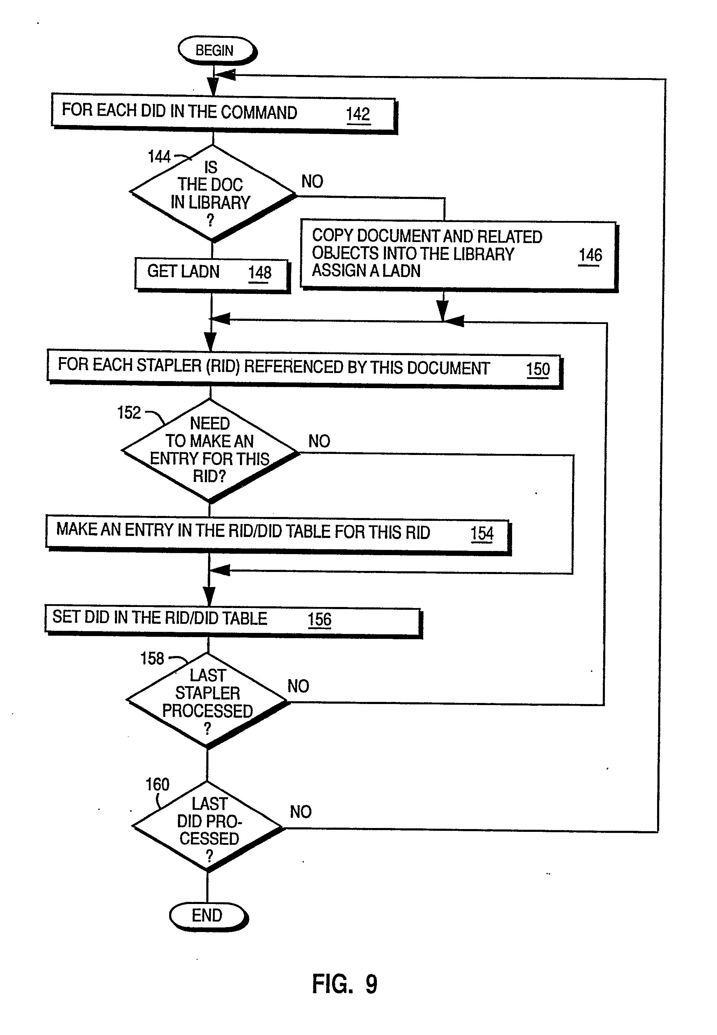

Referring to Fig. 9, there is show a flow diagram for the build table routine in generating the RID/DID and DID/LADN tables. As noted above, the build table routine is called by the server 18. For each DID in the call command, a determination is made in steps 142 and 144 whether the document associated with each respective DID exists in the library 12. If the document is not in the library 12, a copy of the document

12

and its related objects is made and a LADN is assigned thereto in step 146. Otherwise, the LADN for the document filed in the library 12 is fetched in step 148. For each stapler document RID referenced by this document, a determination is made in steps 150 and 152 whether an entry has to be made in the RID/DID table. An entry is made in the RID/DID table in step 154 if required. The DID is set in step 156. Step 158 determines whether all of the stapler documents have been processed and transfers control to step 150 if there are other stapler documents to be processed. Step 160 determines whether the last DID has been processed and transfers control to step 142 if there are other DIDS to be processed.

In summary, there has been disclosed a method of filing stapled documents in an information processing system. An end user indicates to the system that a staple relationship is to be created between at least two identified documents stored in therein. The staple relationship is then defined by entering stapler/staplee attributes of the at least two documents including whether or not history is to be maintained and pointers to the physical locations of the at least two documents in the system. In response to the entry of data defining the staple relationship, a file request is transmitted to the library server along with copies of any documents which are not filed in the library. The server will set the data objects associated with the identified documents to reflect the staple relationship. Thereafter, the server files the identified documents into the library as specified by the staple relationship defined by the end user. It is possible to indicate the stapled relationship to exist within the context of a folder or within the context of an application and to cause any other document stapled to a document to be transmitted, to be transmitted therewith. For completeness, reference is made to co-pending applications ................ (AT9-88-042/043/046).

## Claims

1. In an information processing system having a plurality of documents stored therein, a method of filing documents having a directed relationship within the system, the method comprising the steps of:
identifying at least two of the plurality of documents to be associated with the directed relationship; and
defining a staple relationship between the at least two of the plurality of documents.

2. A method as claimed in claim 1, wherein the defining step includes the steps of:
specifying staple attributes for each of the identified documents; and
indicating a location within the information processing system for each of the identified documents.

3. A method as claimed in claim 2, further includes the step of specifying history attributes for each of the identified documents.

4. A method as claimed in claim 3, wherein one document in the staple relationship is a staplee document having a stapler document attached thereby and wherein the step of specifying staple attributes includes the steps of:
identifying which of the identified documents is the staplee document; and
identifying which of the identified documents is the stapler document.

5. A method as claimed in claim 4, wherein each of the identified documents has a unique identifier within the system and further includes the step of creating a data object associated with the identified stapler document which contains the unique identifier for each document attached by the stapler document and any history attributes associated with the documents attached to the stapler document.

6. A method as claimed in claim 5, further includes the step of creating a data object associated with the identified staplee document which contains the unique identifier for each document attached to the staplee document and any history attributes associated with the documents attached to the staplee document.

7. A method as claimed in any preceding claim, including indicating the stapled relationship to exist within the context of a folder or within the context of an application.

8. A method as claimed in any preceding claim, including the step of causing any other document stapled to a document to be transmitted, to be transmitted therewith.

## FIG. 1

## FIG. 2

| PARAMETER | OCCURENCE | | | |
|---|---|---|---|---|
| ATTRIBUTE PARAMETER SET | REQUIRED | | | |
| FOLDER PARAMETER SET | CONDITIONAL | | | |
| DIF PARAMETER SET | CONDITIONAL | | | |
| STAPLEE PARAMETER SET | CONDITIONAL | | | |
| STAPLER PARAMETER SET | CONDITIONAL | | | |

## FIG. 3

| PARAMETER | OCCURRENCE | MODIFY | SYSTEM | |
|---|---|---|---|---|
| FOLDER ATTRIBUTE | REQUIRED | NO | SET | |
| DIF ATTRIBUTE | REQUIRED | NO | SET | |
| FOLDER - ONLY ATTRIBUTE | REQUIRED | YES | - | |
| STAPLEE ATTRIBUTE | REQUIRED | NO | SET | |
| STAPLER ATTRIBUTE | REQUIRED | NO | SET | |

## FIG. 4

| PARAMETER | OCCURRENCE | MODIFY | SYSTEM | |
|---|---|---|---|---|
| ATTRIBUTES | REQUIRED | - | SET | |
| RELATED DOCUMENT | REQUIRED | - | SET | |

## FIG. 5

| SUBPARAMETER | OCCURRENCE |
|---|---|
| STAPLER LADN | REQUIRED |
| DOCUMENT NAME | REQUIRED |
| CONTEXT | REQUIRED |
| ADD DATA | REQUIRED |
| REMOVE DATA | CONDITIONAL |

## FIG. 6

FIG. 7

```
                    ( START )
                        |
    +-------------------------------------+
    | ROUTINE TO BUILD                    |
    | DID/LADN AND RID/DID TABLES    120  |
    +-------------------------------------+
                        |
    +-------------------------------------------+
    | FOR EACH STAPLER (RID) IN THE RID/DID TABLE   122 |
    +-------------------------------------------+
                        |
    +--------------------------------------------------+
    | FOR EACH DOCUMENT (DID) IN THE RID TABLE ENTRY   124 |
    +--------------------------------------------------+
                        |
    +--------------------------------------------------+
    | FIND STRTOC ENTRY SET LADN FOR THIS DOCUMENT   126 |
    +--------------------------------------------------+
                        |
              128 --    / IS \
                      / STAPLER \      NO
                     < HISTORY MAIN- >------------+
                      \ TAINED  /                 |
                        \  ?  /                    |
                          |                        |
    +-------------------------------------------+  |
    | SET REQUESTER/PRINCIPLE IDS/DATE & TIME  130 | |
    +-------------------------------------------+  |
                          |<-----------------------+
    +-------------------------------------------+
    | SET STAPLER LADN IN STAPLEE'S STETOC   132 |
    +-------------------------------------------+
                          |
              134 --    / IS \
                      / STAPLEE \      NO
                     < HISTORY MAIN- >------------+
                      \ TAINED  /                 |
                        \  ?  /                    |
                          |                        |
    +-------------------------------------------+  |
    | SET REQUESTER/PRINCIPLE IDS/DATE & TIME  136 | |
    +-------------------------------------------+  |
                          |<-----------------------+
              138 --    / LAST \
                      / STAPLEE EN- \   NO
                     < TRY FOR THIS  >-----------+
                      \ RID?  /                  |
                        \   /                    |
                          |                       |
              140 --    / LAST \                  |
                      / RID IN RID/ \   NO        |
                     <  DID TA-      >-----------+
                      \ BLE?  /
                        \   /
                          |
                      ( END )
```

FIG. 8

BEGIN

FOR EACH DID IN THE COMMAND 142

144 — IS THE DOC IN LIBRARY ? — NO

COPY DOCUMENT AND RELATED OBJECTS INTO THE LIBRARY ASSIGN A LADN 146

GET LADN 148

FOR EACH STAPLER (RID) REFERENCED BY THIS DOCUMENT 150

152 — NEED TO MAKE AN ENTRY FOR THIS RID? — NO

MAKE AN ENTRY IN THE RID/DID TABLE FOR THIS RID 154

SET DID IN THE RID/DID TABLE 156

158 — LAST STAPLER PROCESSED ? — NO

160 — LAST DID PRO-CESSED ? — NO

END

FIG. 9